# EUROPEAN PATENT APPLICATION

(11) **EP 4 628 875 A1**
(43) Date of publication of application: **08.10.2025**
(21) Application number: 25167856.1
(22) Date of filing: 01.04.2025
(51) Int. Cl.: G01N 21/88, G01N 21/94, G01N 21/17

(54) **DEVICE FOR DETECTING FOREIGN MATTERS**

(30) Priority: 03.04.2024 KR 20240045439
(71) Applicant: SAMSUNG SDI CO., LTD., Yongin-si, Gyeonggi-do 17084 (KR)
(72) Inventor: KIM, Joonkil, 17084 Yongin-si (KR); LEE, Sungwon, 17084 Yongin-si (KR); HEO, Sang-Heon, 17084 Yongin-si (KR); KIM, Jihan, 17084 Yongin-si (KR); HWANG, Sunuk, 17084 Yongin-Si (KR)
(74) Representative: Marks & Clerk LLP

(57) **Abstract**

A device (100) for detecting foreign substances (M) comprising: a lighting unit (120) for irradiating light toward an object (E) that is brighter in one direction than other directions or uniformly irradiating light toward the object (E); a photographing unit (130) spaced from the lighting unit (120) and capable of photographing the object (E); a controller (140) capable of: allowing the photographing unit (130) to the photograph the object (E) each time the lighting unit irradiates light toward the object that is brighter in one direction than other directions, and controlling the lighting unit (120) and the photographing unit (130) to allow the photographing unit (130) to photograph the object (E) if the lighting unit (120) uniformly irradiates light toward the object (E); and a processor (150) capable of synthesizing images photographed by the photographing unit (130) and determining whether the object (E) has foreign substances (M) from the synthesized image.

## Description

### FIELD

The present invention relates to a device for detecting foreign substances.

### BACKGROUND

General rechargeable batteries are manufactured in various shapes such as cylindrical and prismatic. While manufacturing the rechargeable battery, the electrode plate is cut into the designed shape, and quality of the manufactured electrode plate is inspected before being transferred to the next process.

### SUMMARY

The present disclosure attempts to provide a device for accurately detecting foreign substances with a smaller size than a tab of an electrode plate.

Technical objects of the present disclosure are not limited by the above-described technical object, and the technical objects that are described will be clearly comprehended by a person of ordinary skill in the art.

Some embodiments of the present disclosure provide a device for detecting foreign substances comprising: a lighting unit capable of (e.g. configured to) irradiating light toward an object that is brighter in one direction than in other directions or uniformly irradiating light toward the object; a photographing unit spaced from the lighting unit and capable of (e.g. configured to) photographing the object; a controller capable of (e.g. configured to): allowing (e.g. controlling) the photographing unit to photograph the object each time the lighting unit irradiates light toward the object that is brighter in one direction than other directions, and controlling the lighting unit and the photographing unit to allow (e.g. control or cause) the photographing unit to photograph the object if (e.g. each time, or when) the lighting unit uniformly irradiates light toward the object; and a processor capable of (e.g. configured to) synthesizing images photographed by the photographing unit and determining whether the object has foreign substances from the synthesized image.

The lighting unit may be configured to operate in a first mode (e.g. a non-uniform mode) in which the object is primarily lit from one direction (e.g. such that the light is brighter in one direction than other directions). The lighting unit may be configured to operate in a second mode (e.g. a uniform mode) in which the object is lit uniformly (e.g. uniformly around the object).

The lighting unit may comprise: a body member having a center portion penetrated in a top-down direction (e.g. a vertical direction); light-emitting devices installed inside the body member; and a diffusion member made of a transparent material, installed in the penetrated portion of the body member, and the diffusion member capable of (e.g. configured to) diffusing light irradiated by the light-emitting device.

The body member comprises unit bodies of which end portions are combined with each other, the light-emitting device may be installed in the unit bodies, and a lighting set comprises the light-emitting device installed in one of the unit bodies.

The lighting unit may comprises a lighting set, a second lighting set, a third lighting set, and a fourth lighting set, each lighting set comprising at least one light-emitting device, the body member may comprise four of the unit bodies, and the first, second, third, and fourth lighting sets may each be installed in one of the unit bodies.

The controller may be capable of (e.g. configured to) turning on the light-emitting device of one of the first to fourth lighting sets and may be capable of (e.g. configured to) turning off the light-emitting devices of other lighting sets thereof. For instance, the controller may be configured to turn on only one of the first to fourth lighting sets to cause the first to fourth lighting sets to irradiate light toward the object such that the light is brighter in one direction than in other directions.

The controller may be capable of (e.g. configured to) turning on the light-emitting devices of the first to fourth lighting sets. For instance, the controller may be configured to turn on the light-emitting devices of the first to fourth lighting sets at the same time (e.g. simultaneously).

The photographing unit may be disposed along a same top-down direction as the diffusion member.

The processor may comprise an image synthesizer capable of (e.g. configured to) synthesizing images obtained by the photographing unit, and a deep learner capable of (e.g. configured to) inputting a synthesized image received from the image synthesizer to a machine-learned foreign substances detection model and determining whether foreign substances are included therein.

The deep learner may be capable of (e.g. configured to) repeatedly machine-learning the foreign substances detection model and determining whether the foreign substances are included therein.

The photographing unit may be capable of (e.g. configured to) photographing the object and may be capable of (e.g. configured to) obtaining first images each time the lighting unit irradiates light to the object from a front side, a rear side, a right side, and a left side, and the photograph unit may be capable of (e.g. configured to) photographing the object and may be capable of (e.g. configured to) obtaining a second image if (e.g. each time or when) the lighting unit uniformly irradiates light toward the object. For instance, a first image may be obtained each time the lighting unit irradiates light to the object from one of the front side, the rear side, the right side and the left side.

The processor may be capable of (e.g. configured to) converting the first images into a sheet of image by a photometric stereo (PS) method featuring shape information. A sheet of image may be a composite of multiple images into a single image.

The processor may be capable of (e.g. configured to) synthesizing the first images and the second image by an RGB color method.

The RGB color method may comprise a channel R, a channel G, and a channel B, the channel R may be a match of the second image, the channel G may be a match of a synthesized image of the first images, and the channel B may be a match of a dummy image.

Some aspects of the present disclosure general relate to a method of manufacturing a device for detecting foreign substances. In some embodiments, the method comprises: positioning a lighting unit proximate to an object such that the lighting unit irradiates light toward the object that is brighter in one direction than other directions or the lighting unit irradiates light uniformly toward the object; positioning a photographing unit apart from the lighting unit such that the photographing unit photographs the object; connecting a controller to the photographing unit and the lighting unit such that: the controller allows the photographing unit to photograph the object each time the lighting unit irradiates light toward the object that is brighter in one direction than other directions, and the controller allows the lighting unit and the photographing unit to photograph the object if the lighting unit uniformly irradiates light toward the object; and connecting a processor to the controller such that the processor synthesizes images photographed by the photographing unit and determining whether the object has foreign substances from the synthesized image.

In some embodiments, the method further comprises positioning light-emitting devices inside a body member of the lighting unit.

In some embodiments, the method further comprises positioning each lighting set inside a unit body of the body unit. For instance, in some embodiments, the method further comprises positioning a (e.g. at least one) lighting set inside a unit body of the body member.

In some embodiments, the method further comprises connecting the controller to a first lighting set, a second lighting set, a third lighting set, and/or a fourth lighting set.

In some embodiments, the method further comprises positioning the photographing unit along a same top-down direction as a diffusion member positioned in a center portion of the lighting unit.

In some embodiments, the diffusion member comprises a transparent material and diffuses light irradiated by the light-emitting device.

In some embodiments, the processor comprises an image synthesizer and a deep learner.

According to the present disclosure, the device for detecting foreign substances may examine the object by using the RGB color synthesis image synthesized from the images obtained by irradiating relatively bright light to the object in one direction and photographing the same, and the image obtained by uniformly irradiating light toward the object. Foreign material that has similar qualities to the object and foreign material that has different qualities from the object may have visibility on the same level. The foreign substances attached to the object may be accurately detected by increasing the visibility of the foreign substances attached to the object (e.g. through different illumination schemes).

The device for detecting foreign substances may accurately distinguish the object having the foreign substances (e.g. may accurately identify whether the object has foreign substances), thereby preventing bad influences to the quality of the rechargeable battery and the manufacturing device by the foreign substances.

The defect rate of the rechargeable battery may be reduced, and the productivity may be increased. The shape of the electrode plate that may be the object may be accurately measured.

At least some of the above and other features of the invention are set out in the claims.

### BRIEF DESCRIPTION OF THE DRAWINGS

The following drawings appended to the specification illustrate embodiments of the present invention to serve a technical concept of the present disclosure to be understood easily together with detailed descriptions of the present invention, so the present invention should not be meant to restrict the disclosure to the matters illustrated in the accompanying drawings.
FIG. 1 shows a perspective view on a device for detecting foreign substances according to some embodiments.
FIG. 2 shows a cross-sectional view on a device for detecting foreign substances according to some embodiments.
FIG. 3 to FIG. 10 show top plan views and photographs on a case in which a photographing unit photographs an object each time a lighting unit irradiates light to an object in a direction, according to some embodiments.

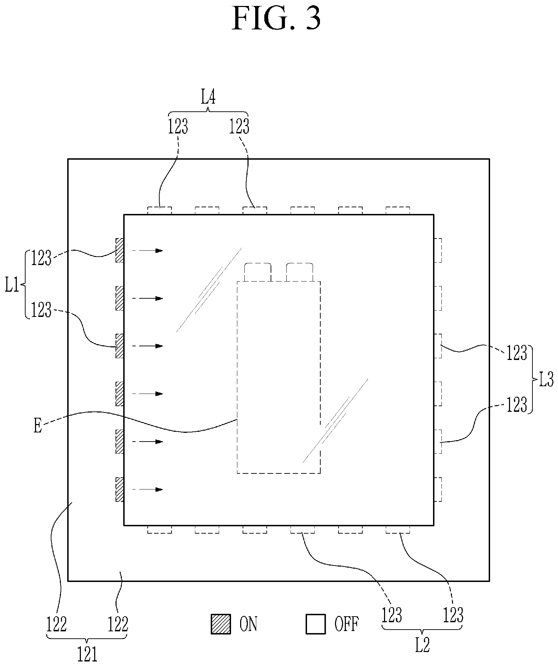

FIG. 3 shows a front view on a state in which a first lighting set emits light.

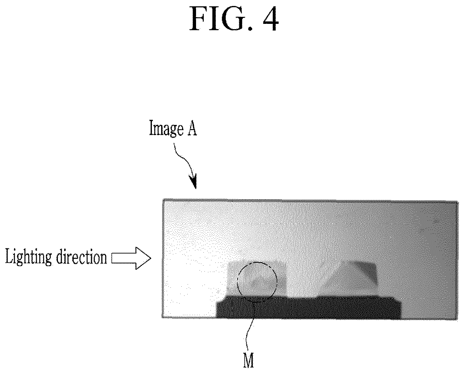

FIG. 4 shows a photograph of an object photographed by a photographing unit if a first lighting set emits light, according to some embodiments.

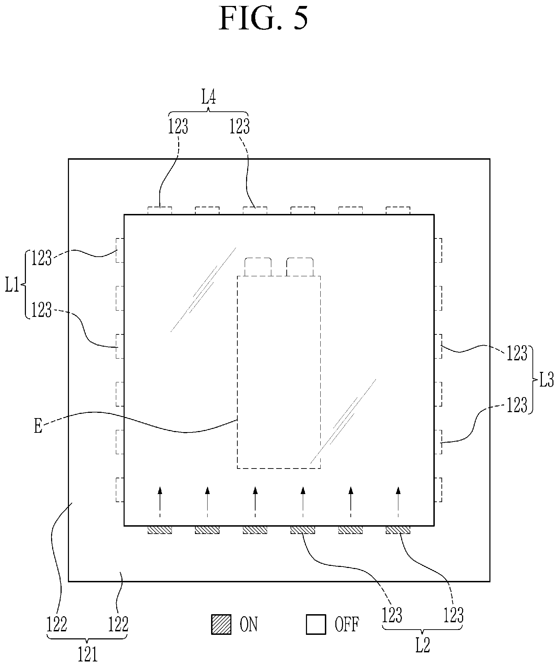

FIG. 5 shows a front view on a state in which a second lighting set emits light, according to some embodiments.

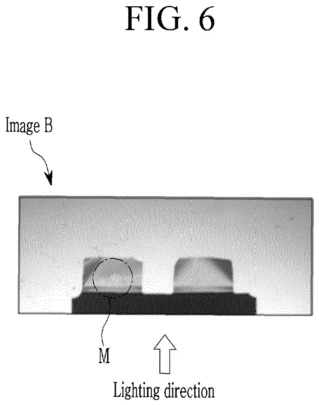

FIG. 6 shows a photograph of an object photographed by a photographing unit if a second lighting set emits light, according to some embodiments.

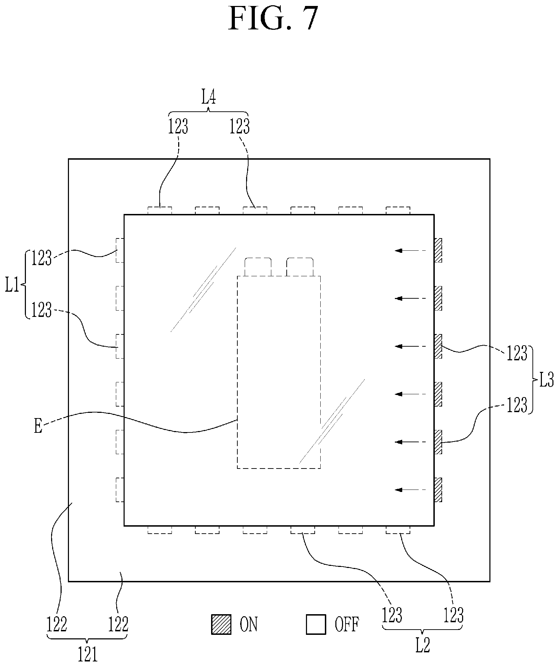

FIG. 7 shows a front view on a state in which a third lighting set emits light, according to some embodiments.

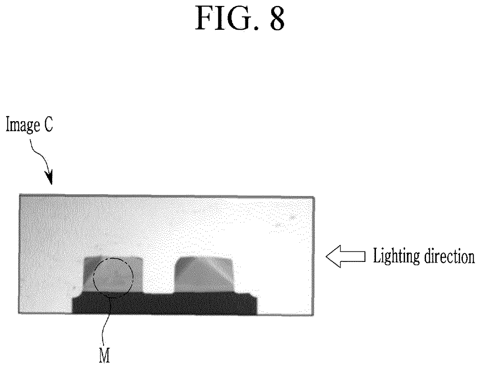

FIG. 8 shows a photograph of an object photographed by a photographing unit if a third lighting set emits light, according to some embodiments.

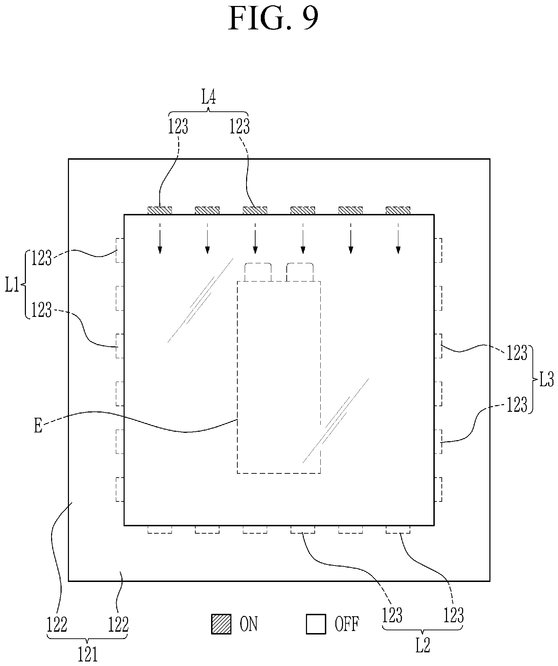

FIG. 9 shows a front view on a state in which a fourth lighting set emits light, according to some embodiments.

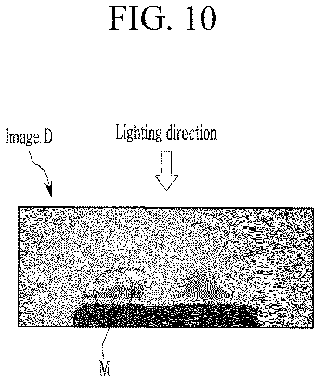

FIG. 10 shows a photograph of an object photographed by a photographing unit if a fourth lighting set emits light, according to some embodiments.

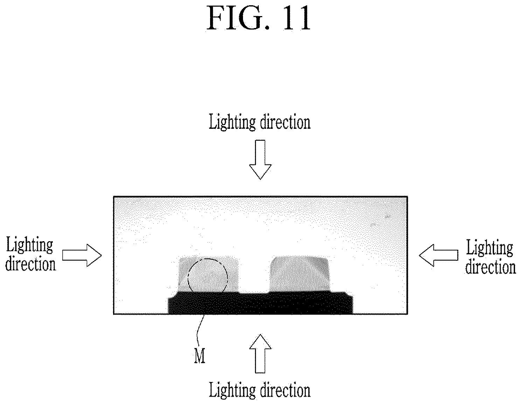

FIG. 11 shows a photograph of an object photographed by a photographing unit if a lighting unit uniformly irradiates light toward an object, according to some embodiments.

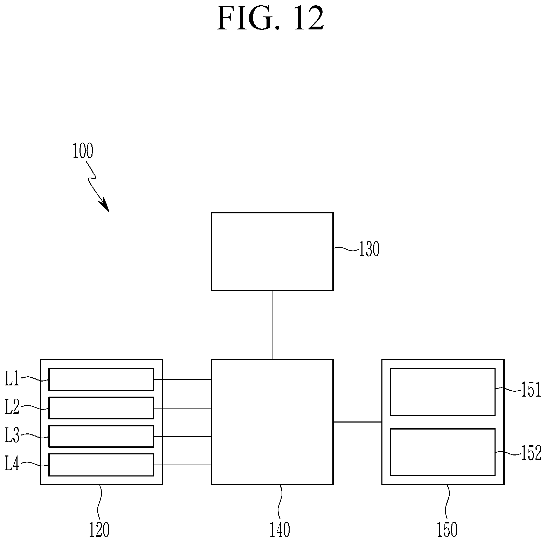

FIG. 12 shows a schematic diagram on a device for detecting foreign substances according to some embodiments.

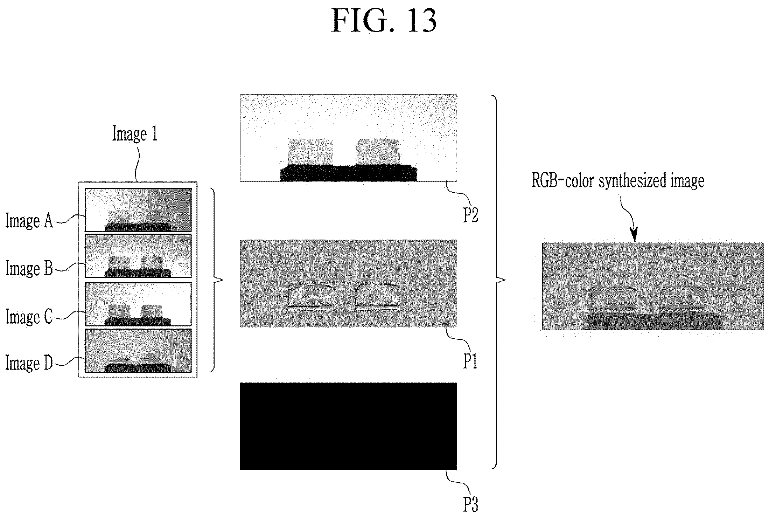

FIG. 13 shows photographs on a process for a processor to synthesize a first image and a second image by an RGB color method, according to some embodiments.

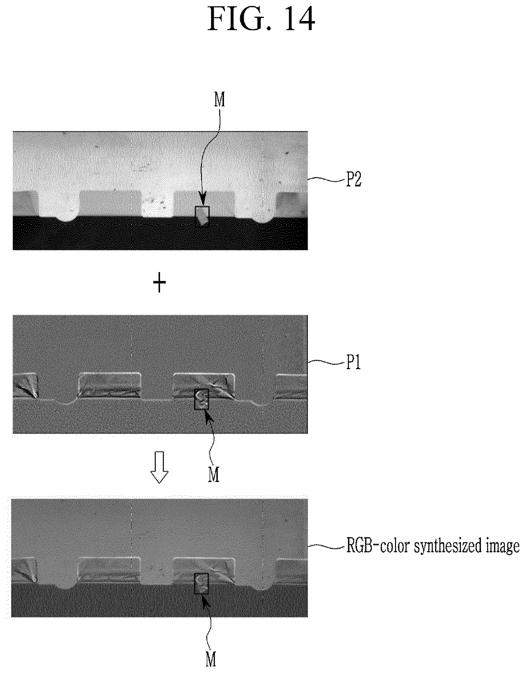

FIG. 14 shows a process for a processor to synthesize an RGB color synthesis image from an image obtained by photographing an object, according to some embodiments.

### DETAILED DESCRIPTION

Hereinafter, embodiments of the present disclosure will be described in detail with reference to the accompanying drawings. Terms or words used in the present specification and claims, which will be described below, should not be interpreted as being limited to typical or dictionary meanings, but should be interpreted as having meanings and concepts which comply with the technical features of the present invention, based on the principle that an inventor can appropriately define the concept of the terms to describe his/her own invention in the best manner. Therefore, configurations illustrated in the embodiments and the drawings described in the present specification are only the most preferred embodiment of the present invention and do not represent all of the technical features of the present invention, and thus it is to be understood that various equivalents and modified examples, which may replace the configurations, are possible if filing the present application.

If used in the present specification, "comprise and include" and/or "comprising and including" may specify the existence of the mentioned shapes, numbers, steps, operations, members, elements and/or these groups, and may not exclude the presence or addition of one or more other shapes, numbers, movements, members, elements and/or groups.

To aid understanding of the disclosure, the attached drawings may not be drawn to actual scale, but the dimensions of some components may be exaggerated. The same reference number may be assigned to the same component in another embodiment.

The statement that two objects of comparison are "the same" may mean "substantially the same". Therefore, the substantial sameness may include a case, for example, where the deviation is within 5%, which is considered low in the industry. Uniformity of a parameter in a given region may mean uniformity from an average perspective.

Although first, second, etc. are used to describe various components, the components may not be limited by these terms. These terms are only used to distinguish one component from another, and unless specifically stated to the contrary, the first component may also be the second component.

Throughout the specification, unless otherwise stated, each component may be singular or plural.

The placement of any components on a "upper portion (or a lower portion)" of a component or the "top (or bottom)" of a component may mean that any component is placed in contact with the top (or bottom) of the component. This may mean that other configurations may be interposed between and any configuration placed on (or under) the component.

It should be understood that if a component is described as "connected to" or "coupled to" another component, the components may be directly connected or accessed to each other, but other components may be "interposed" between the respective components, or the respective components may be connected, combined, or accessed to each other through other components.

As used herein, the term "and/or" includes any and all combinations of one or more of the associated listed items. The use of "may" if describing embodiments of the present disclosure refers to "one or more embodiments of the present disclosure. Expressions such as "one or more" and "one or more" in front of a list of elements may modify the entire list of elements and may not modify individual elements of the list.

If it says "A and/or B" throughout the specification, it may mean A, B or A and B unless there is a special opposing statement, and if it says "C to D" it may mean that it is higher than C and lower than D unless there is a special opposing statement.

If a syntax such as "at least one of A, B and C", "at least one of A, B or C", "at least one selected from A, B and C group" and "at least one selected from A, B and C" is used to specify a list of elements A, B and C, the syntax may refer to any and all suitable combinations.

The term "use" may be considered synonymous with the term "utilize". As used in the present specification, "substantially," "approximately," and similar terms may be used as terms of approximation rather than terms of degree, taking into account inherent variations in measured or calculated values as would be recognized by a person of ordinary skill in the art.

The terms first, second, third, etc. may be used to describe various elements, components, regions, layers and/or sections, but the elements, components, regions, layers and/or sections may not be limited by these terms. The terms may be used to distinguish one element, component, region, drawing layer or cross-section from another element, component, region, drawing layer or cross-section. Hence, the first element, component, region, layer or section discussed below may be named a second element, component, region, layer or section without departing from the teachings of the embodiments.

As shown in the drawings, to describe the relationship between one element or feature and other element (s) or feature(s), for ease of description, spatial relative terms such as beneath, below, lower, above, upper, etc. may be used in the present specification. Spatially relative dispositions will be understood to encompass different directions of the device in use or operation in addition to the direction depicted in the figures. For example, if the drawing device is flipped, an element described as "below" or "bottom" another element may be understood to be "above" or "beyond" another element. Therefore, the term "down" may encompass both up and down directions. Furthermore, whilst there is discussion herein of a top-down direction, or vertical direction, it will be appreciated that these directions are defined relative to the structure of the device (e.g. the stage 110) and need not imply any particular orientation of the device in use.

The terms used in this specification are intended to describe embodiments of the present disclosure and are not intended to limit the present disclosure.

Quality inspection items include sizes, shapes, and foreign substances for each region that makes up the electrode plate. The conventional inspection method is specialized for a color difference-based dimensional inspection. Accordingly, a conventional quality inspection method is vulnerable to inspecting metal foreign material scraps, the visibility of metal thin-film foreign materials (same material) on the metal tab is very low, so it is impossible to inspect the foreign substances with a relatively small size excluding the foreign materials that are larger than the metal tab.

A device for detecting foreign substances according to some embodiments will now be described with reference to accompanying drawings.

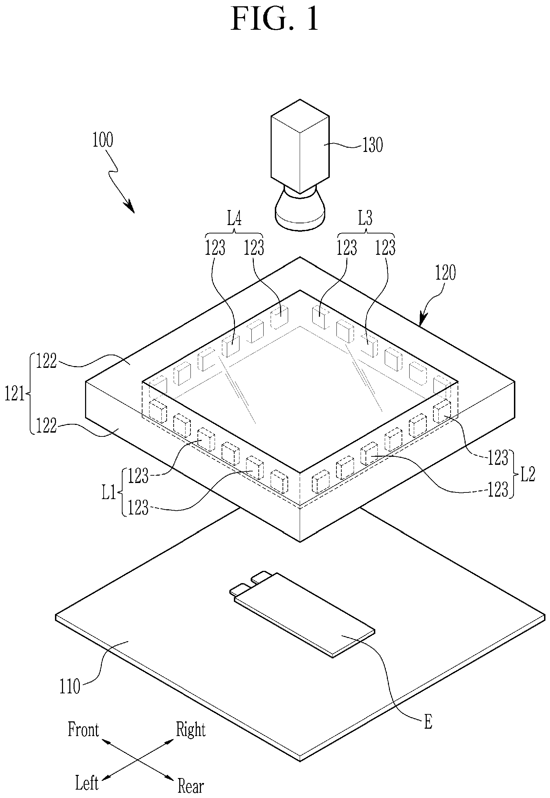

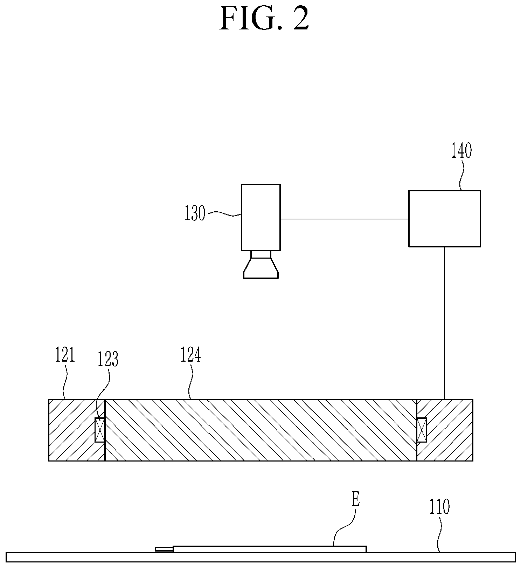

FIG. 1 shows a perspective view on a device for detecting foreign substances according to some embodiments, and FIG. 2 shows a cross-sectional view on a device for detecting foreign substances according to some embodiments.

Referring to FIG. 1 and FIG. 2, the device for detecting foreign substances 100 may include a lighting unit 120, a photographing unit 130, a controller 140 (see FIG. 12), and a processor 150 (see FIG. 12).

The lighting unit 120 may irradiate light toward an object E so that a photographing unit may clearly photograph the object E. The lighting unit 120 may irradiate light toward the object E in a direction, and in some embodiments, the lighting unit 120 may irradiate light relatively brighter than that in other directions or may irradiate uniform light toward the object E.

For example, the lighting unit 120 may irradiate light from a front of the object E. The lighting unit 120 may irradiate light from a rear of the object E.

The lighting unit 120 may irradiate light from a right side of the object E. The lighting unit 120 may irradiate light from a left side of the object E. For example, the lighting unit 120 may irradiate light that is relatively brighter than that in other directions toward the object E in the four directions.

In some embodiments, the lighting unit 120 may irradiate uniform light toward the object E. Uniform light may be uniform (e.g. substantially uniform) in multiple (e.g. four) directions. Uniform light may be uniform (e.g. substantially uniform) in all directions around the object E. Uniform lighting may refer to uniform lighting around a horizontal plane (e.g. a plane parallel to the stage 110) but need not be uniform around a vertical plane (e.g. around axis running parallel to the stage 110). For example, the underside of the object need not be lit even in uniform illumination. For example, the lighting unit 120 may simultaneously irradiate light to the object E from the front side, the rear side, the right side, and the left side. This will be described in detail later.

The object E used by the device for detecting foreign substances 100 may, for example, be an electrode plate used in manufacturing the rechargeable battery. The object E may be mounted on the stage 110. The stage 110 may be disposed in a working space. Although not shown in the drawing, the object E may be transferred to the stage 110 by a non-illustrated transfer unit.

In some embodiments, the objects E may be disposed on a conveyor unit (not shown) and may be transferred. If the transfer of the object E is stopped for a predetermined time, the lighting unit 120 may irradiate light to the object E, which may then be photographed by the photographing unit 130 to be described. To this end, the lighting unit 120 may be installed to be spaced upward from the conveyor unit (not shown).

The photographing unit 130 may be spaced from the lighting unit 120, and may photograph the object E. The photographing unit 130 may, for example, include a camera (not shown).

The photographing unit 130 may be disposed on the lighting unit 120. The photographing unit 130 and the lighting unit 120 may be fixed to an individual frame (not shown) to maintain a relative disposition.

The controller 140 may control the lighting unit 120 and the photographing unit 130. In further detail, the controller 140 may allow the photographing unit 130 to photograph the object E each time the lighting unit 120 may irradiate relatively brighter light in one direction than other directions, and it may allow the lighting unit 120 to irradiate uniform light toward the object E so that the photographing unit 130 may photograph the object E.

The processor 150 may synthesize the images photographed by the photographing unit 130, and may determine whether foreign substances M are disposed on the object E from the synthesized image. The process for the processor 150 to synthesize images will be described later.

If the processor 150 determines that the foreign substances M are disposed on the object E, the conveyor unit (not shown) for transferring the object E may be stopped to control the transfer thereof to the next process. If the processor 150 determines that there are no foreign substances M on the object E, the conveyor unit (not shown) may be operable to transfer the object E to the next process.

The device for detecting foreign substances 100 according to some embodiments may synthesize the image (e.g., see "Image 1" in FIG. 13) photographed by irradiating relatively brighter light in one direction than that in other directions and the image P2 (see FIG. 13) photographed by irradiating uniform light toward the object E, and may relatively quickly and accurately detect the foreign substances M (see FIG. 4) disposed on the object E.

The device for detecting foreign substances 100 for accurately detecting the foreign substances M disposed on the object E according to some embodiments will now be described in detail.

The lighting unit 120 may, for example, include a body member 121, light-emitting devices 123, and a diffusion member 124.

The body member 121 may have a polygonal shape, and a center portion of the body member 121 may be penetrated in a top-down direction (e.g., hollowed and/or carved out). The top-down direction may be a direction in which the camera 130 is spaced apart from the stage 110. The top-down direction may be perpendicular to the stage 110. The body member 121 may include unit bodies 122 of which end portions are combined with each other. The unit body 122 may, for example, have a column shape.

The body member 121 in which the unit bodies 122 are combined to each other may, for example, have a rectangular shape or a square shape. The body member 121 may include four unit bodies 122.

The light-emitting devices 123 may be installed inside the body member 121. The respective light-emitting devices 123 may be disposed at predetermined intervals. The light-emitting devices 123 may be installed in the unit bodies 122, and the light-emitting device(s) 123 installed in one of the unit bodies 122 may configure one lighting set.

In further detail, the lighting unit 120 may include first to fourth lighting sets L1, L2, L3, and L4 including at least one light-emitting device 123. The respective first to fourth lighting sets L1, L2, L3, and L4 may be installed in the unit bodies 122. For example, each of respective first to fourth lighting sets L1, L2, L3, and L4 may be installed in a respective unit body 122. For example, six light-emitting devices 123 may be installed in one of the unit bodies 122, and one lighting set may comprise six light-emitting devices 123, according to some embodiments (e.g., six light-emitting devices 123 installed in one of the unit bodies 123 form one lighting set).

The respective first to fourth lighting sets L1, L2, L3, and L4 may be individually connected to the controller 140, and the controller 140 may individually control the first to fourth lighting sets L1, L2, L3, and L4, which is not limited thereto.

The diffusion member 124 may be made of a transparent material, and may be installed in a penetrated portion of the body member 121. The diffusion member 124 may diffuse the light irradiated by the light-emitting device 123. The photographing unit 130 may be disposed along the same top-down direction as the diffusion member 124 so that the photographing unit 130 may photograph the object E.

Although not shown in the drawing, a portion of the diffusion member 124 facing to the photographing unit 130 may have an opening so that the photographing unit 130 can accurately photograph the object E.

The lighting unit 120 may emit light by the diffusion member 124. If the first to fourth lighting sets L1, L2, L3, and L4 are turned on, light may be uniformly irradiated to the object E. For instance, if all of the first to fourth lighting sets L1, L2, L3, and L4 are turned on, light may be uniformly irradiated to the object E.

In some embodiments, if the first to fourth lighting sets L1, L2, L3, and L4 are turned on one by one, the light may be strongly irradiated to one direction of the object E. That is, if only a subset (e.g. only one) of the lighting sets is turned on, and the other lighting set(s) are turned off, the object E may be subject to non-uniform illumination, in which the light is stronger in one direction than in at least one other direction. Light may partially irradiate the entire external shape of the object E. Hence, the photographing unit 130 may accurately photograph the entire external shape of the object E without shades (e.g., shadows).

The controller 140 may turn on the light-emitting devices 123 of one of the first to fourth lighting sets L1, L2, L3, and L4, and may turn off the light-emitting devices 123 of the others thereof.

The photographing unit 130 may photograph the object E to obtain first images (see FIG. 13) each time the lighting unit 120 irradiates the object E with light from one lighting direction (e.g. one of the front side, the rear side, the right side, and the left side). The first images may be grey scale images.

FIG. 3 shows a front view on a state in which a first lighting set emits light, and FIG. 4 shows a photograph of an object photographed by a photographing unit if a first lighting set emits light, according to some embodiments.

Referring to FIG. 3 and FIG. 4, the controller 140 may turn off the second lighting set L2, the third lighting set L3, and the fourth lighting set L4 if turning on the first lighting set L1, according to some embodiments. The photographing unit 130 may photograph the object E and may obtain an image A.

FIG. 5 shows a front view of a state in which a second lighting set emits light, and FIG. 6 shows a photograph of an object photographed by a photographing unit if a second lighting set emits light (as shown in FIG. 5), according to some embodiments.

Referring to FIG. 5 and FIG. 6, the controller 140 may turn off the first lighting set L1, the third lighting set L3, and the fourth lighting set L4 when turning on the second lighting set L2, in some embodiments. The photographing unit 130 may photograph the object E and may obtain an image B.

FIG. 7 shows a front view of a state in which a third lighting set emits light, and FIG. 8 shows a photograph of an object photographed by a photographing unit if a third lighting set emits light, according to some embodiments.

Referring to FIG. 7 and FIG. 8, the controller 140 may turn off the first lighting set L1, the second lighting set L2, and the fourth lighting set L4 when turning on the third lighting set L3, in some embodiments. The photographing unit 130 may photograph the object E and may obtain an image C.

FIG. 9 shows a front view of a state in which a fourth lighting set emits light, and FIG. 10 shows a photograph of an object photographed by a photographing unit if a fourth lighting set emits light, according to some embodiments.

Referring to FIG. 9 and FIG. 10, the controller 140 may turn off the first lighting set L1, the second lighting set L2, and the third lighting set L3 when turning on the fourth lighting set L4, in some embodiments. The photographing unit 130 may photograph the object E and may obtain an image D.

The operational processes of the photographing unit 130 and the lighting unit 120 may be performed regardless of order. The photographing unit 130 may accordingly obtain four sheets of the first images (see FIG. 13). For instance, the photographing unit 130 may accordingly obtain four of the first images (e.g. four instances of the first images). More generally, the photographing unit 130 may obtain a first image for each lighting direction provided by the lighting unit 120. A lighting direction may be a direction in which non-uniform light is provided (e.g. a strongest direction of illumination for non-uniform illumination). Each lighting set may provide illumination in a corresponding lighting direction.

The processor 150 may convert the first images (see FIG. 13) comprising images A to D into a sheet of images by a Photometric Stereo (PS) method featuring shape information. The processor 150 may convert the first images (see FIG. 13) comprising images A to D into a synthesized image (e.g. a first synthesized image). The synthesized image includes shape information and may be used in examining the foreign substances M of the similar qualities (e.g., the same material as the object). For instance, the synthesized image produced through photometric stereo may comprise a surface normal map that describes the orientation of the surface at each pixel. The shape information may be encoded by calculating shape information using multiple images taken under different lighting directions. A normal vector for each pixel can be obtained by using the direction of the shadow, and the change in the normal vector may be the same as the change in the curvature of the target object. The change of the normal vector per pixel may be converted into a relative value for the shape. The synthesized image may therefore describe the shape of the object. Therefore, it may be used in accurately detecting the small metal foreign substances M disposed on the object E. For example, it may be used in detecting the metal foreign substances M disposed on the tab of the electrode plate.

Although not shown in the drawing, the controller 140 may turn on the light-emitting devices 123 of the first to fourth lighting sets L1, L2, L3, and L4. In this case, the light may be irradiated around the object E (e.g. the object E may be uniformly irradiated).

FIG. 11 shows a photograph of an object photographed by a photographing unit if a lighting unit uniformly irradiates light toward an object, according to some embodiments.

Referring to FIG. 11, if light is uniformly irradiated toward the object E (see FIG. 1), the object E (see FIG. 1) may be photographed and one second image P2 may be obtained.

The second image P2 includes color information so it may be used in examining the foreign substances M of a different material (e.g., a material that is different than the material of the object). Hence, it may be used to accurately detect whether a coated portion such as an active material layer included in the electrode plate that may be the object E (see FIG. 1) is applied as intended.

FIG. 12 shows a schematic diagram on a device for detecting foreign substances according to some embodiments.

Referring to FIG. 12, the processor 150 may, for example, include an image synthesizer 151 and a deep learner 152.

The image synthesizer 151 may synthesize the images P1 and P2 obtained by the photographing unit 130.

The deep learner 152 may input the synthesized image received from the image synthesizer 151 to a machine-learned foreign substances detection model and may determine whether the foreign substances M are included. The deep learner 152 may repeatedly machine-learn (e.g. train) the foreign substances detection model to determine whether the foreign substances M are included. For instance, the deep learner 152 may be a deep learning system. The foreign substances detection model may comprise a machine learning model (e.g. an artificial neural network) that is trained to identify whether any foreign substances are present in the synthesized image (e.g. on the object). The foreign substances detection model may be a classifier that is configured to classify the synthesized image (e.g. as including one or more foreign substances or as not including one or more foreign substances). The foreign substances detection model may be trained using labelled training data (e.g. images of objects that have corresponding ground-truth labels specifying whether the images include any foreign substances). For instance, the foreign substances detection model may be trained using supervised learning (e.g. using an objective function that aims to minimize the error of predictions (determinations regarding foreign substance presence) of the foreign substances detection model). In addition or alternatively, the foreign substances detection model may be trained using unsupervised learning (e.g. using reinforcement learning based on a reward function).

FIG. 13 shows photographs on a process for a processor to synthesize a first image and a second image by an RGB color method, according to some embodiments.

Referring to FIG. 13, the processor 150 may synthesize the first images ("Image 1") and the second image P2 by an RGB color method. The RGB color method may include a channel R, a channel G, and a channel B.

The channel R is a match of the one second image P2.

The channel G is a match of the image P1 obtained by synthesizing the first images.

The channel B is a match of a dummy image P3. The dummy image P3 may have no image data. The RGB color method includes the channel R, the channel G, and the channel B so the dummy image P3 may be empty data for filling the channel B.

Regarding the synthesized RGB-color synthesized image, the channel R and the channel G include data so the entire color may be configured with green and red, and blue may be excluded. The finally synthesized RGB-color image may accurately display the shape of the electrode plate (e.g., the object E, in some embodiments), and may accurately display the fine foreign substances disposed on the electrode plate.

As described herein, image synthesis may be the combination of multiple images to form a single synthesized image. For instance, the first images may be combined through a Photometric Stereo (PS) method to form a first synthesized image (image 1) that includes shape information. When synthesizing the RGB-color synthesized image, the first synthesized image may be combined with the second image and the dummy image. This may be achieved by providing the first synthesized image in a first channel (e.g. a red channel corresponding to red color), and providing the second synthesized image in a second channel (e.g. a green channel corresponding to green color). The dummy image may be provided in a third channel (e.g. a blue channel corresponding to blue color).

If the conventional examining device fails to detect the relatively small metal foreign substances M of the same quality (e.g., of the same material as the object E) that may be disposed on the object E, this may negatively impact the manufacturing of the rechargeable battery.

As shown in FIG. 14, the device for detecting foreign substances 100 may irradiate relatively brighter light toward the object in one direction than in other directions, may synthesize the image P1 generated by synthesizing the photographed images and the image P2 photographed by uniformly irradiating light to the object E, and may synthesize a dummy image (not shown) to obtain the RGB color synthesis image.

The device for detecting foreign substances 100 may examine the object by using the RGB color synthesis image to increase visibility of the foreign substances adhered to the electrode plate, the object E. The foreign material that has the similar qualities as the object and the foreign material that has the different quality from the object may have similar visibility. The foreign substances M attached to the object may be accurately detected.

The device for detecting foreign substances 100 may accurately distinguish the object E having the foreign substances M, thereby substantially preventing negative impacts to the quality of the rechargeable battery and the manufacturing of the device by the foreign substances M.

Therefore, the defect rate of the rechargeable battery may be reduced, and the productivity may be increased. Further, the shape of the electrode plate that becomes the object E may be accurately measured.

The accompanying drawings and the embodiments of the present invention are only examples of the present invention, and are used to describe the present invention but do not limit the scope of the present invention as defined by the following claims. It will be understood by those of ordinary skill in the art that various modifications and equivalent embodiments may be made. Therefore, the technical scope of the present invention may be defined by the technical idea of the following clams.

## Claims

1. A device for detecting foreign substances comprising:
a lighting unit configured to irradiate light toward an object that is brighter in one direction than in other directions or uniformly irradiate light toward the object;
a photographing unit spaced from the lighting unit and configured to photograph the object;
a controller configured to:
allow the photographing unit to photograph the object each time the lighting unit irradiates light toward the object that is brighter in one direction than other directions, and
control the lighting unit and the photographing unit to allow the photographing unit to photograph the object if the lighting unit uniformly irradiates light toward the object; and
a processor configured to synthesize images photographed by the photographing unit to produce a synthesized image and determine whether the object has foreign substances from the synthesized image.

2. The device as claimed in claim 1, wherein
the lighting unit comprises:
a body member having a center portion penetrated in a top-down direction;
light-emitting devices installed inside the body member; and
a diffusion member made of a transparent material, installed in the penetrated portion of the body member, the diffusion member being configured to diffuse light irradiated by the light-emitting device.

3. The device as claimed in claim 2, wherein
the body member comprises unit bodies of which end portions are combined with each other,
the light-emitting device is installed in the unit bodies, and
a lighting set comprises the light-emitting device installed in one of the unit bodies.

4. The device as claimed in claim 3, wherein
the lighting unit comprises a first lighting set, a second lighting set, a third lighting set, and a fourth lighting set, each lighting set comprising at least one light-emitting device,
the body member comprises four of the unit bodies, and
the first, second, third, and fourth lighting sets are each installed in one of the unit bodies.

5. The device as claimed in claim 4, wherein the controller is configured to:
turn on the light-emitting device of one of the first to fourth lighting sets and turn off the light-emitting devices of other lighting sets thereof; and/or
turn on the light-emitting devices of the first to fourth lighting sets.

6. The device as claimed in any of claims 2-5, wherein
the photographing unit is disposed along a same top-down direction as the diffusion member.

7. The device as claimed in any preceding claim, wherein
the processor comprises:
an image synthesizer configured to synthesize images obtained by the photographing unit, and
a deep learner configured to input a synthesized image received from the image synthesizer to a machine-learned foreign substances detection model and determine whether foreign substances are included therein.

8. The device as claimed in claim 7, wherein
the deep learner is configured to repeatedly train the foreign substances detection model and determine whether the foreign substances are included therein.

9. The device as claimed in any preceding claim, wherein
the photographing unit is configured to photograph the object and obtaining first images each time the lighting unit irradiates light to the object from a front side, a rear side, a right side, and a left side, and the photograph unit is configured to photograph the object and obtain a second image if the lighting unit uniformly irradiates light toward the object.

10. The device as claimed in claim 9, wherein
the processor is configured to convert the first images into a sheet of image by a photometric stereo method featuring shape information.

11. The device as claimed in claim 9 or claim 10, wherein
the processor is configured to synthesize the first images and the second image by an RGB color method.

12. The device as claimed in claim 11, wherein
the RGB color method comprises a channel R, a channel G, and a channel B,
the channel R is a match of the second image,
the channel G is a match of a synthesized image of the first images, and
the channel B is a match of a dummy image.

13. A method of manufacturing a device for detecting foreign substances, the method comprising:
positioning a lighting unit proximate to an object such that the lighting unit irradiates light toward the object that is brighter in one direction than other directions or the lighting unit irradiates light uniformly toward the object;
positioning a photographing unit apart from the lighting unit such that the photographing unit photographs the object;
connecting a controller to the photographing unit and the lighting unit such that:
the controller allows the photographing unit to photograph the object each time the lighting unit irradiates light toward the object that is brighter in one direction than other directions, and
the controller allows the lighting unit and the photographing unit to photograph the object if the lighting unit uniformly irradiates light toward the object; and
connecting a processor to the controller such that the processor synthesizes images photographed by the photographing unit and determining whether the object has foreign substances from the synthesized image.

14. The method of claim 13, further comprising positioning light-emitting devices inside a body member of the lighting unit, and optionally further comprising one or more lighting sets inside a unit body of the body unit.

15. The method of claim 13 or claim 14, wherein:
the method further comprises connecting the controller to a first lighting set, a second lighting set, a third lighting set, and/or a fourth lighting set; and/or
the method further comprises positioning the photographing unit along a same top-down direction as a diffusion member positioned in a center portion of the lighting unit, wherein, optionally, the diffusion member comprises a transparent material configured to diffuse light irradiated by the light-emitting device; and/or
the processor comprises an image synthesizer and a deep learner.
